# EUROPEAN PATENT SPECIFICATION

(11) **EP 2 458 251 B1**
(45) Date of publication and mention of the grant of the patent: **13.08.2014**
(21) Application number: 11190804.2
(22) Date of filing: 25.11.2011
(51) Int. Cl.: F16J 15/02, F16L 23/16, F16L 37/092, F16L 41/08, F16L 13/14

(54) **A composite sliding gasket for high-pressure joints**
Verbundstoffgleitbuchse für Hochdruckanschlussstücke
Joint coulissant composite pour joints haute pression

(30) Priority: 25.11.2010 IT MI20102190
(43) Date of publication of application: 30.05.2012
(73) Proprietor: Coes Company Srl, 20096 Piol Tello (MI) (IT)
(72) Inventor: BIZZARRINI, Giuseppe, 20096 PIOLTELLO (MI) (IT)
(74) Representative: Sarpi, Maurizio

(56) References cited:
- DE-C- 660 112
- DE-C- 688 252
- DE-U1-202007 009 846
- US-A- 2 953 398
- US-A- 5 803 513
- US-A1- 2010 078 937

## Description

The present invention relates to the sector of joints for high-pressure pipes, and in particular regards an innovative sliding gasket.

According to the current known art, sealing of couplings between a hollow shaft and a hole is commonly ensured by toroidal rubber gaskets housed in annular slots made on the outer surface of the shaft. The section of the rubber torus prior to assembly projects from the slot where it is housed.

During assembly, the cross section of the gasket is compressed within the slot enabling sealing. The compression of the gasket occurs thanks to a chamfer made on the rim of the hole. The compressive stress depends upon the angle of the chamfer: the smaller the angle of the chamfer, the lower the compressive stress. For technological reasons, the angle of the chamfer cannot be less than 30°.

It should also be noted that, if the hole belongs to a pipe that needs to be cut to size, it happens that the hole is ovalized during the cutting operation, and the chamfer must be made at that moment, after cutting and prior to assembly. For this purpose, a tool must be used formed by an expander plug that calibrates the ovalized hole and by a mill that makes the chamfer. There frequently arises the condition where this operation is performed badly or even omitted. In these conditions, the compressive load on the gasket becomes very high, the sharp edge of the hole can damage the gasket or cause exit thereof from the seat, and the surface of the shaft that interferes with the ovalized hole can damage the inner surface of the hole jeopardizing fluid tightness of the joint.

Known to the art are some solutions aimed at reducing these problems.

The patent No. EP0854997B1, regarding a composite gasket, eliminates the need for seats on the shaft: there is no metal contact between the shaft and the hole during assembly. This solution increases, however, the insertion load, requires a chamfer on the rim of the hole performed in a workmanlike manner and, in the event of disassembly, the gasket tends to remain within the hole creating a series of additional problems for extracting the gasket.

The patent No. EP1983245A1 regards a particular profile of the shaft that eliminates the interference between the hole and the gasket, but requires the inner surface of the hole to be deformed after assembly in order to compress the gasket radially. This solution solves the majority of the problems but only limitedly to the case where the hole of the pipe can be deformed easily. In addition, the deformation of the pipe (pressing) is a complex operation that requires particular equipment.

DE 660 112 C discloses a joint according to the preamble of claim 1.

The main purpose of the present invention is to overcome the aforesaid problems, to eliminate the conditions of malfunctioning of the gasket after assembly between the shaft and the hole, as well as to eliminate the need for calibrating, chamfering, and pressing tools.

The purpose of the above is to enable correct and safe assembly without the need for particular equipment and in general reducing to a technically possible minimum the assembly load, moreover enabling an easy visual inspection of correct positioning of the gasket when assembly is completed.

The above has been achieved, according to the invention, by providing a composite gasket formed substantially by a rubber part and by a rigid ring (e.g., made of plastic, metal, etc.) - having function of flange - which is designed to draw the gasket itself from the resting position to the working position by the external pipe or hole that is axially fitted on the internal pipe or barbed fitting. Compression of the gasket that guarantees fluid tightness occurs thanks to the presence of a purposely provided conical area on the barbed fitting.

A better understanding of the invention will be obtained from the ensuing description and with reference to the attached drawings, which illustrate, purely by way of non-limiting example some preferred embodiments.

In the drawings:

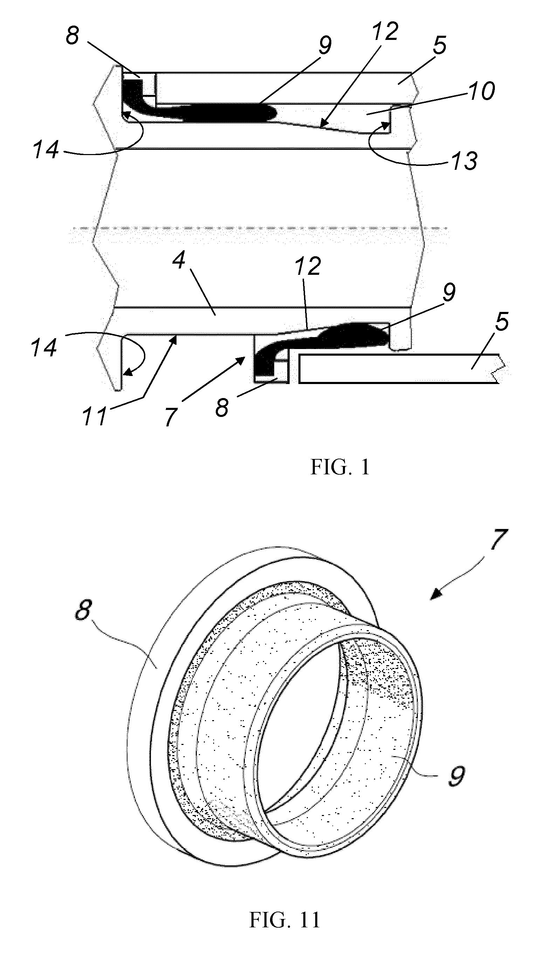

Figure 1 is a schematic illustration of the inventive idea underlying the invention: the top part shows the gasket in a compressed configuration for guaranteeing tightness, whereas in the bottom part said gasket is in the resting position prior to coupling;
Figure 2A is an axial sectional view of a first embodiment of a joint with a coupling of the push-fit type with clinched bushing;
Figure 2B is a three-dimensional view corresponding to the previous one;
Figure 3A shows some constructional details corresponding to Figure 2B;
Figure 3B is an overall side view of the push-fit joint of Figure 2A;
Figure 4, similar to the previous one, regards a variant of Figure 2A;
Figure 5, similar to Figure 2A, regards a variant that shows a mechanical connector with sliding gasket with threaded bushing;
Figures 6-9 are views in axial section that show in sequence the coupling steps of a second embodiment of the invention, in which fixing of the joint is of a press-fit type;
Figure 10 is an overall side view of the press-fit joint of Figure 9;
Figure 11 is a three-dimensional view of the sliding gasket according to the present invention;
Figures 12 and 13 are two three-dimensional views, respectively an axial section and an overall view, of a third embodiment of the invention regarding the case where the barbed fitting is coupled to a hole made in a wall instead of in a pipe; and
Figures 14 and 15 are, respectively, a front view and an axial section of the third embodiment of Figures 12 and 13.

According to the present invention, a composite gasket 7 is provided, basically constituted by a rubber ring 9 fixedly coupled to a flange made of rigid material 8 (plastic or metal or some other suitable material), said gasket being designed to seal a coupling with play between a hollow shaft 4 and a hole 5 flowing within which is a pressurized fluid.

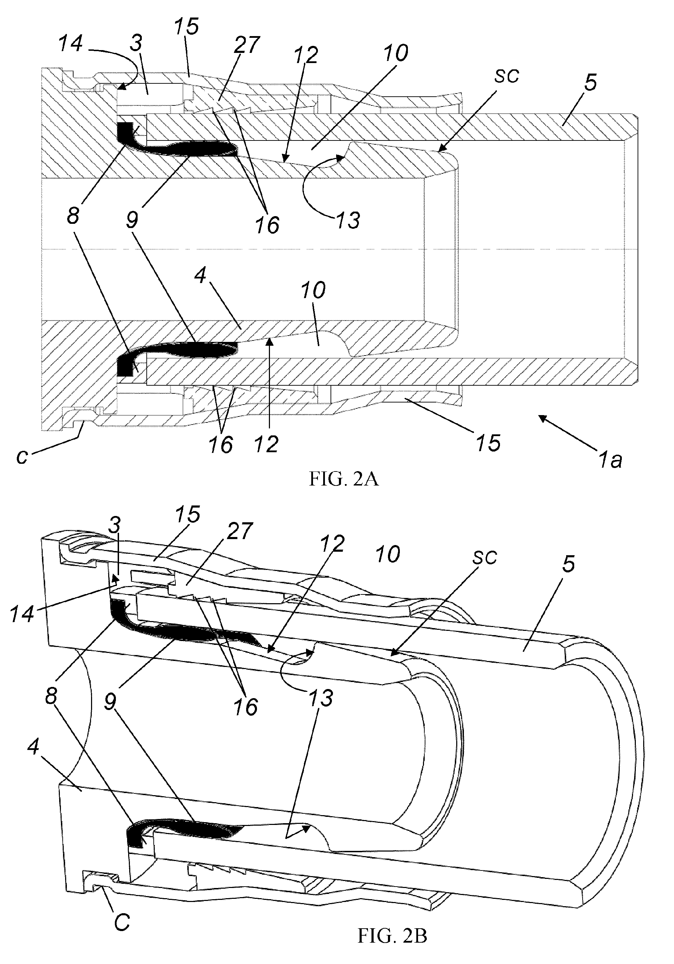

In a first embodiment of the invention that is described (Figures 2A-3B), the gasket 7 is designed for being housed in a circumferential seat 10 made on the outer surface of a hollow shaft or barbed fitting 4, which in what follows will be referred to also as "resting seat 10", in such a way that the outer diameter of the rubber ring 9 positioned in said seat 10 is smaller than or equal to the diameter of the shaft 4 itself and smaller than the diameter of the hole 5.

According to a peculiar characteristic of the present invention, the resting seat 10 is radiused by a conical ramp 12 to another portion of the shaft 4 that will be referred to as "working seat 11" of the gasket 7. The working seat 11 has a diameter that is greater than the diameter of the resting seat 10 and smaller than the diameter of the shaft 4 itself.

For what has been said, during insertion in the axial direction of the shaft 4 in the hole 5, the rim of the hole 5 engages the flange 8, axially displacing the gasket 7 along the conical ramp 12 from the resting seat 10 to the working seat 11. The rubber ring 9 is progressively compressed between the inner surface of the hole 5 and the outer surface of the shaft 4 as far as maximum compression in the working seat 11, thus ensuring pressure tightness.

In said configuration, the shaft 4 and the hole 5 are fixed together by means of known mechanical devices or systems.

In the example illustrated, the end of the shaft 4 to be inserted in the hole 5 envisages another portion with a specific function: the calibration seat SC. This is a frustoconical area with appropriate inclination suited to restoring the circularity of the hole of a pipe 5 cut to size, where the section of cut is ovalized.

With reference to Figures 2A onwards, the calibration seat SC is joined to the adjacent resting seat 11 by means of a shoulder 13, resting on which is the edge of the rubber ring 9 to prevent accidental detachment of the gasket 7 from the barbed fitting 4.

According to the invention, it is envisaged that, once the coupling has been made, the front surface of the flange 8 is set bearing upon a purposely provided shoulder 14 with radial development, which juts out in a direction perpendicular to the end of the working seat 11.

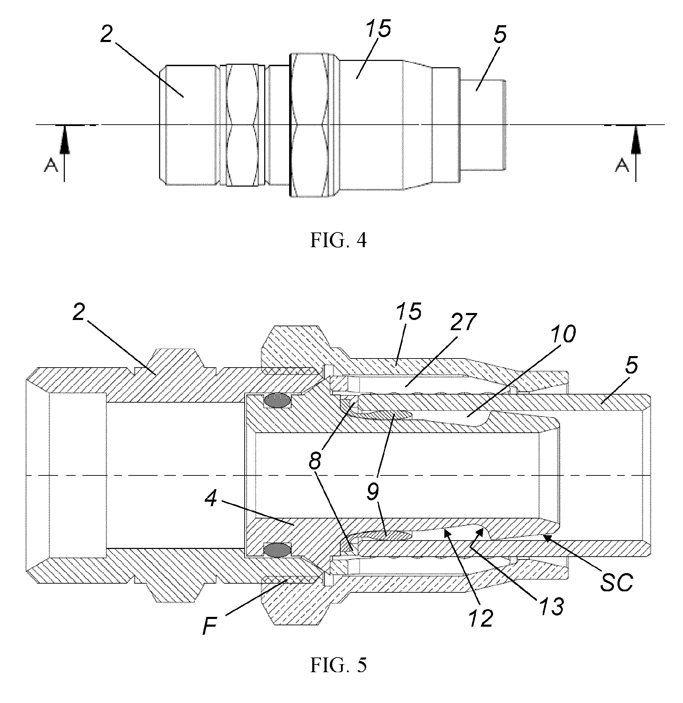

According to the invention, in the case where the hole 5 is made within an external pipe, for fixing axially the parts after their coupling to obtain the joint, a shaped sleeve 15 is provided, which, on the side facing the root of the barbed fitting 4, is provided with a fixing area and, on the opposite side, is provided with a conical seat sliding within which is a conical ring 27 with an internal toothing 16, designed to grip on the outer surface of the aforesaid external pipe 5 to prevent decoupling of the parts and consequent opening of the joint of the push-fit type 1a. In the first embodiment of the invention described, said fixing area of the shaped sleeve 15 is designed to be fixed by clinching C (Figures 2A-3B), whereas in a variant of said first embodiment, said fixing area is provided with a thread F (Figures 4 and 5),

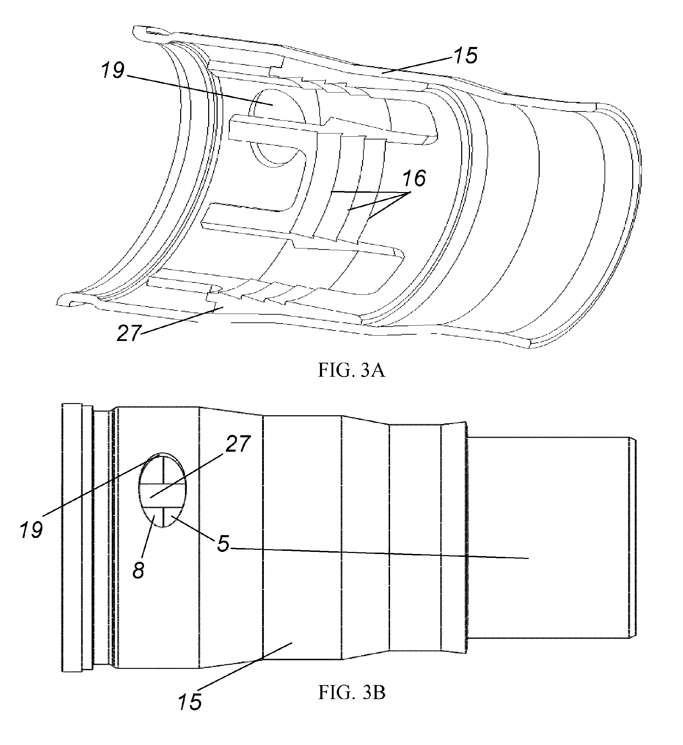

A further peculiar characteristic of the invention lies in that said shaped sleeve 15 is preferably provided with one or more through holes 19, which are uniformly distributed along a circumference and appropriately positioned in such a way that, when the joint is made, it is possible to verify proper positioning of the gasket 7 with respect to the barbed fitting 4 and to the pipe 5: if the joint is made correctly, visible from the holes 19 is a part of the rigid ring nut 8 and a part of the lateral surface of the external pipe 5 (Figure 3B).

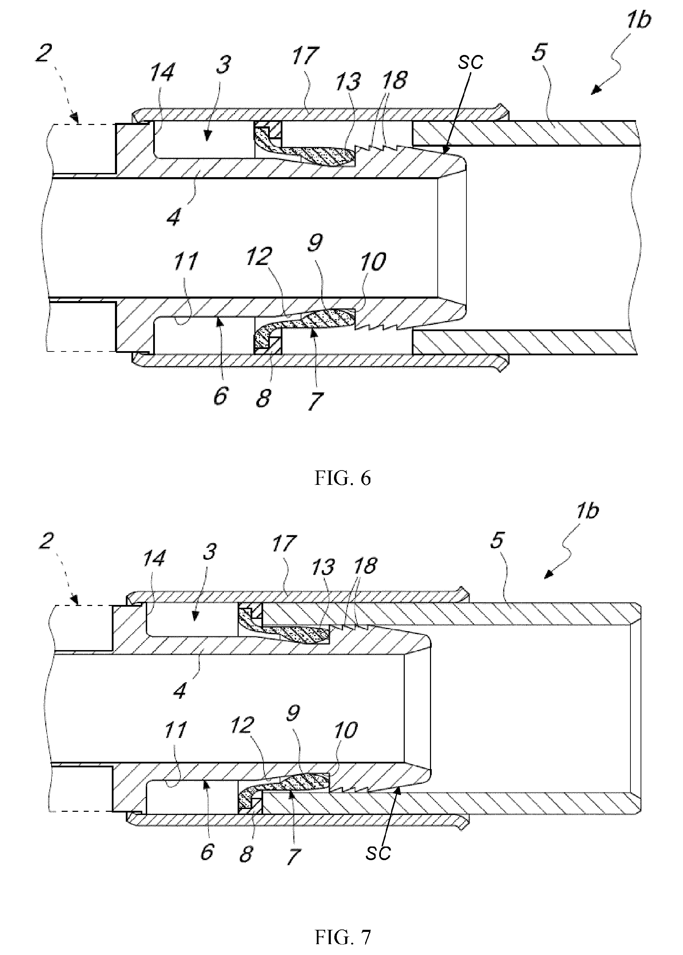

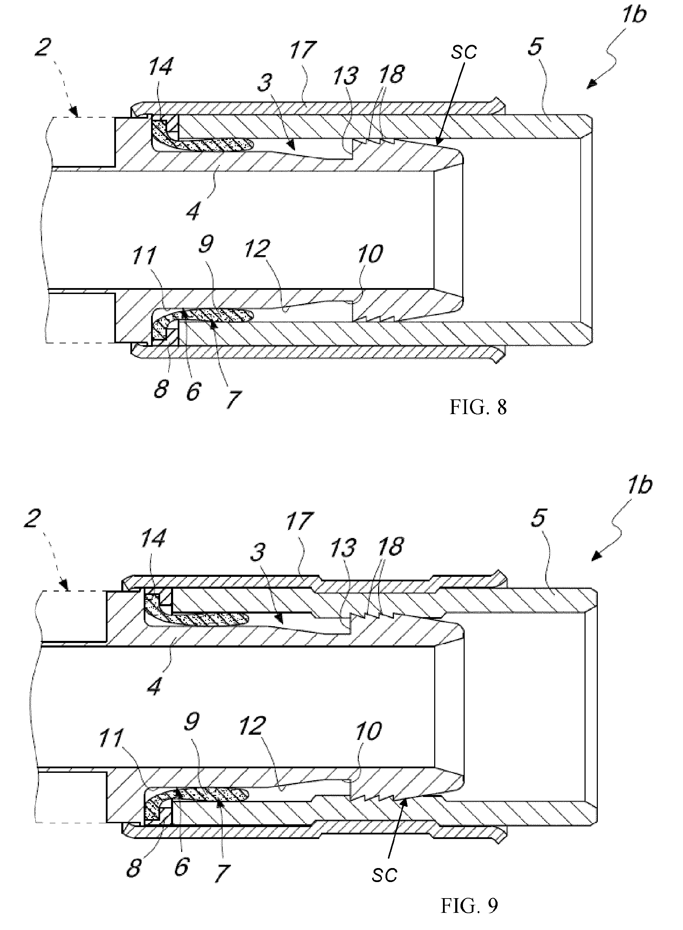

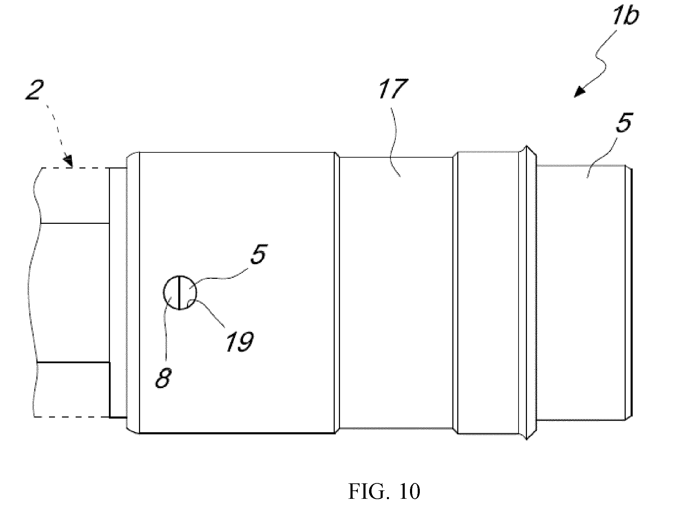

A second embodiment of the invention, shown in Figures 6-10, regards a joint of a press-fit type 1b, which, albeit envisaging axial insertion of the pipe or hollow shaft 4 in the hole 5, differs from the previous case in that, as an alternative to the shaped sleeve 15 described above, an outer tubular sleeve 17 is provided, which, after the sealed joint has been made by means of the axial coupling already described, is designed to undergo plastic deformation in a known way to press radially a purposely provided internal annular area of the pipe 5 against a gripping tooting 18 purposely provided on the outer surface of the calibration seat SC adjacent to the shoulder 13.

Also in this case, the one or more through holes 19 already described are preferably provided.

From what has been said, it emerges clearly that the invention enables an easy and safe assembly of a high-pressure joint without particular equipment for preparing the joint, which can be easily inspected.

This gasket is particularly indicated for those connections between hollow shaft and hole of the push-fitting or press-block-fitting type. These joints enable joining of pipes by just manual pressure. As has already been mentioned, the mechanical resistance of the joint is ensured by a deformable serrated ring that withholds the outer surface of the pipe 5. In these particular joints, during assembly it is necessary to compress the gasket and deform the seal ring. As a result, the assembly load in the solutions so far known can become particularly high, jeopardizing the advantages of practicality that these joints enable. Having available a gasket 7 according to the invention, which requires a minimal compressive load, becomes a determining factor.

Advantageously, the sliding gasket 7 according to the invention is of general use, can be used for sealing connections provided with flanges or threaded ring nuts, and for both press-fit and push-fit connections.

Thanks to the particular configuration of the invention, the equipment necessary for providing the sealed joint is minimal. In addition to the tool for cutting the pipes 5 that are to be cut to size, it is necessary to have available simply what is prescribed by the particular system of mechanical connection.

For what has been said, the present invention advantageously eliminates radically the problem of exit of the gasket from its own seat during installation of the pipe 5 on the barbed fitting 4.

Another advantage lies in that the force of assembly of the pipe is considerably reduced.

Yet a further advantage is that it does not require machining of the end of the pipe, such as calibration and deburring.

A further advantage is that, if the end of the pipe is excessively ovalized, assembly would be impossible, thus guaranteeing a "fool-proof" effect.

Moreover, it enables easy inspection of correct assembly both of the gasket and of the pipe.

Finally, it is worthwhile noting that the present invention can be applied both to joints of a push-fit type la (axial assembly by hand) and to joints of the press-fit type 1b (radial pressing).

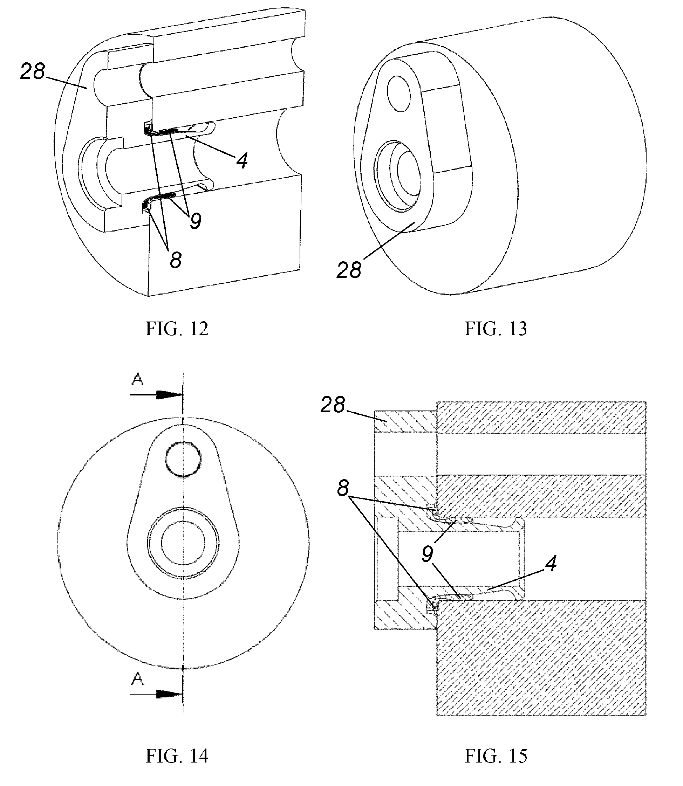

A third embodiment of the invention, shown in Figures 12-14, concerns the case where the push-fit connection regards a constructional configuration in which the hole 5 is made in a wall instead of in a pipe.

In this case, the barbed fitting 4 is fixed with respect to a front fixing element 28 designed to be constrained in a known way to the wall in which the hole 5 is present.

## Claims

1. A joint for high-pressure pipes, **characterized in that** it comprises, in combination, an external pipe or hole (5) designed to be axially fitted on an internal pipe or barbed fitting (4), and a composite sliding gasket (7) set between them, wherein said sliding composite gasket (7) is basically formed by a rubber part (9) and by a rigid ring (8) - having the function of flange - which is designed to draw the gasket (7) itself from a resting position or seat (10) to a working position or seat (11) by said external pipe or hole (5) that is axially fitted on said internal pipe or barbed fitting (4) in such a way that compression of the rubber part (9) of the gasket (7), which guarantees fluid tightness, is achieved thanks to the presence of a conical area (12) purposely provided on the barbed fitting (4) between said resting seat (10) and said working seat (11), wherein:
- said rubber part is basically constituted by a rubber ring (9) fixedly coupled to a coaxial flange made of rigid material (8) of plastic or metal or some other suitable material, said gasket (7) being designed to seal a coupling with play between the hollow shaft or internal pipe (4) and the hole (5) within which a pressurized fluid can flow;
- said gasket (7) is designed for being housed in said resting seat (10) that is circumferential and is made on the outer surface of the barbed fitting (4) in such a way that the outer diameter of the rubber ring (9) positioned in said seat (10) is smaller than or equal to the diameter of the barbed fitting (4) itself and smaller than the diameter of the hole (5);
- said resting seat (10) is radiused by a conical ramp (12) to the working seat (11) of the gasket (7) that is provided in another portion of the shaft (4); wherein the working seat (11) has a diameter that is greater than the diameter of the resting seat (10) and smaller than the diameter of the shaft (4) itself;
**characterized in that**
during insertion in the axial direction of the shaft (4) into the hole (5), the rim of the hole (5) is designed to engage with the flange (8), axially displacing the gasket (7) along the conical ramp (12) from the resting seat (10) to the working seat (11); thus obtaining that the rubber ring (9) is progressively compressed between the inner surface of the hole (5) and the outer surface of the shaft (4) as far as maximum compression in the working seat (11), thus ensuring pressure tightness.

2. The joint according to the preceding claim, **characterized in that** the end of the shaft (4) to be inserted into the hole (5) envisages another portion that functions as calibration seat (SC), constituted by a frustoconical area with appropriate inclination, suited to restoring the circularity of the hole of a pipe cut to size, where the section of cut is ovalized.

3. The joint according to the preceding claim, **characterized in that** the calibration seat (SC) is joined to the adjacent resting seat (10) by means of a shoulder (13) resting on which is the edge of the rubber ring (9) in order to prevent accidental detachment of the gasket (7) from the barbed fitting (4).

4. The joint according to the preceding claim, **characterized in that**, once the coupling has been made, the front surface of the flange (8) is set bearing upon a purposely provided shoulder (14) with radial development, which juts out in a direction perpendicular to the end of the working seat (11).

5. The joint according to the preceding claim, **characterized in that**, in the case where the hole (5) is made within an external pipe, in order to fix the parts axially after their coupling to obtain the joint, a shaped sleeve (15) is provided, which, on the side facing the root of the barbed fitting (4), is provided with a fixing area and, on the opposite side, is provided with a conical seat sliding within which is a conical ring (27) with an internal toothing (16), designed to grip on the outer surface of the aforesaid external pipe (5) to prevent decoupling of the parts and consequent opening of the joint of a push-fit type (1a); said fixing area being axially constrained to the barbed fitting (4) by means of a purposely provided clinching (C) or threading (F).

6. The joint according to the preceding claim, **characterized in that** said shaped sleeve (15) is provided with one or more through holes (19), which are uniformly distributed along a circumference and appropriately positioned in such a way, that when the joint is made properly, visible from each hole (19) is only a part of the rigid ring nut (8) and a part of the lateral surface of the external pipe (5).

7. The joint according to Claim 4, **characterized in that**, in the case where the hole (5) is made within an external pipe, in order to fix the parts axially after their coupling to obtain the joint, an outer tubular sleeve (17) is provided, which, after the sealed joint has been obtained, is designed to be deformed plastically in a known way to press an appropriate internal annular area of the pipe (5) against a gripping tooting (18) purposely provided on the outer surface of the calibration seat (SC) adjacent to the shoulder (13).

8. The joint according to the preceding claim, **characterized in that** said outer sleeve (17) is provided with one or more through holes (19), which are uniformly distributed along a circumference and appropriately positioned in such a way that, when the joint is made properly, visible from each hole (19) is only a part of the rigid ring nut (8) and a part of the lateral surface of the external pipe (5).

## Patentansprüche

1. Eine Verbindung für Hochdruck-Rohre, **dadurch gekennzeichnet, dass** diese in Kombination umfasst, ein externes Rohr oder Loch (5), welches dazu ausgebildet ist, axial auf ein internes Rohr oder einen internen Stecknippel (4) montiert zu werden, und eine zwischen diese positionierte zusammengesetzte Gleitdichtung (7), wobei die zusammengesetzte Gleitdichtung (7) im Wesentlichen aus einem Gummistück (9) und einem starren Ring (8) mit der Funktion eines Flansches gebildet wird, welcher dazu ausgebildet ist, die Dichtung (7) selbst von einer Ruheposition oder einem Ruhesitz (10) in eine Arbeitsposition oder einen Arbeitssitz (11) mittels des externen Rohrs oder Lochs (5) zu ziehen, das in so einer Weise axial auf das interne Rohr oder den internen Stecknippel (4) montiert ist, dass eine Kompression des Gummistücks (9) der Dichtung (7), womit Flüssigkeitsdichtheit garantiert wird, aufgrund des Vorhandenseins eines konischen Bereichs (12) erreicht wird, welcher zu diesem Zweck auf dem Stecknippel (4) zwischen dem Ruhesitz (10) und dem Arbeitssitz (11) bereitgestellt wird, wobei:
- das Gummistück im Wesentlichen aus einem Gummiring (9) besteht, welcher fest an einen koaxialen Flansch gekoppelt ist, der aus einem starrem Material (8) aus Kunststoff oder Metall oder einem anderen geeigneten Material gefertigt ist, wobei die Dichtung (7) dazu ausgebildet ist, eine Verbindung mit Spiel zwischen dem hohlen Schaft oder dem internen Rohr (4) und dem Loch (5) zu schließen, worin eine unter Druck befindliche Flüssigkeit fließen kann;
- die Dichtung (7) dazu ausgebildet ist, in dem Ruhesitz (10) untergebracht zu werden, der rundumlaufend ist und auf der äußeren Oberfläche des Stecknippels (4) in so einer Weise gefertigt ist, dass der äußere Durchmesser des in dem Sitz (10) positionierten Gummirings (9) kleiner gleich dem Durchmesser des Stecknippels (4) selbst und kleiner als der Durchmesser des Lochs (5) ist;
- der Ruhesitz (10) von einer konischen Rampe (12) zu dem Arbeitssitz (11) der Dichtung (7) hin gerundet wird, die in einem weiteren Abschnitt des Schafts (4) bereitgestellt wird; wobei der Arbeitssitz (11) einen Durchmesser aufweist, der größer als der Durchmesser des Ruhesitzes (10) und kleiner als der Durchmesser des Schafts (4) selbst ist;
**dadurch gekennzeichnet, dass**
der Rand des Lochs (5) dazu ausgebildet ist, während der Einführung des Schafts (4) in das Loch (5) in die axiale Richtung, an dem Flansch (8) anzugreifen, wobei die Dichtung (7) axial entlang der konischen Rampe (12) von dem Ruhesitz (10) zu dem Arbeitssitz (11) versetzt wird; wodurch erreicht wird, dass der Gummiring (9) zwischen der inneren Oberfläche des Lochs (5) und der äußeren Oberfläche des Schafts (4) zunehmend bis zur maximalen Kompression im Arbeitssitz (11) zusammengedrückt wird, wodurch Druckdichtheit sichergestellt wird.

2. Die Verbindung nach dem vorstehenden Anspruch, **dadurch gekennzeichnet, dass** das in das Loch (5) einzuführende Ende des Schafts (4) einen weiteren Abschnitt vorsieht, der als ein Kalibrierungssitz (SC) fungiert, bestehend aus einem kegelstumpfförmigen Bereich mit geeigneter Inklination, dazu geeignet, die Rundheit des Lochs eines zugeschnittenen Rohres wiederherzustellen, wobei der geschnittene Bereich ovalisiert wird.

3. Die Verbindung nach dem vorstehenden Anspruch, **dadurch gekennzeichnet, dass** der Kalibrierungssitz (SC) mit dem benachbarten Ruhesitz (10) über eine Flanke (13) verbunden ist, auf welcher der Rand des Gummirings (9) ruht, um eine versehentliche Abtrennung der Dichtung (7) von dem Stecknippel (4) zu verhindern.

4. Die Verbindung nach dem vorstehenden Anspruch, **dadurch gekennzeichnet, dass**, sobald die Kopplung gemacht ist, die Stirnfläche des Flansches (8) auf einer zu diesem Zweck bereitgestellten, in radiale Richtung gebildeten Flanke (14) aufgesetzt wird, welche in eine Richtung senkrecht zu dem Ende des Arbeitssitzes (11) hervorragt.

5. Die Verbindung nach dem vorstehenden Anspruch, **dadurch gekennzeichnet, dass** in dem Fall, wo das Loch (5) innerhalb eines externen Rohrs gefertigt ist, eine Muffe (15) zur axialen Befestigung der Bestandteile nach deren Kopplung zum Schließen der Verbindung bereitgestellt wird, welche auf der der Basis des Stecknippels (4) zugewandten Seite mit einem Befestigungsbereich versehen ist und auf der entgegengesetzten Seite mit einem konischen Sitz versehen ist, innerhalb dessen ein konischer Ring (27) mit einer inneren Zahnung gleitet, dazu ausgebildet, an der äußeren Oberfläche des externen Rohrs (5) anzugreifen, um ein Entkoppeln der Bestandteile und ein daraus folgendes Öffnen der Verbindung vom Typ einer Steckverbindung (1a) zu verhindern; wobei der Befestigungsbereich mittels einer zu diesem Zweck bereitgestellten Einpressung (C) oder einem Gewinde (F) axial an den Stecknippel (4) gebunden ist.

6. Die Verbindung nach dem vorstehenden Anspruch, **dadurch gekennzeichnet, dass** die Muffe (15) mit einer oder mehreren Durchgangsöffnungen (19) versehen ist, welche gleichmäßig entlang einem Umfang verteilt sind und geeignet in solcher Weise positioniert sind, dass, wenn die Verbindung richtig geschlossen ist, von jeder Öffnung (19) nur ein Teil der starren Ringmutter (8) und ein Teil der lateralen Oberfläche des externen Rohrs (5) sichtbar sind.

7. Die Verbindung nach Anspruch 4, **dadurch gekennzeichnet, dass** in dem Fall, wo das Loch (5) innerhalb eines externen Rohrs gebildet ist, eine äußere röhrenförmige Muffe (17) zur axialen Befestigung der Bestandteile nach deren Kopplung zum Schließen der Verbindung bereitgestellt wird, welche dazu ausgebildet ist, auf eine bekannte Weise plastisch verformt zu werden, sobald die geschlossene Verbindung erhalten wurde, um einen geeigneten internen ringförmigen Bereich des Rohrs (5) gegen eine Greifzahnung (18) zu pressen, welche zu diesem Zweck auf der äußeren Oberfläche des Kalibrierungssitzes (SC) anliegend an die Flanke (13) bereitgestellt wird.

8. Die Verbindung nach dem vorstehenden Anspruch, **dadurch gekennzeichnet, dass** die äußere Muffe (17) mit einer oder mehreren Durchgangsöffnungen (19) versehen ist, welche gleichmäßig entlang einem Umfang verteilt sind und geeignet in solcher Weise positioniert sind, dass, wenn die Verbindung richtig geschlossen ist, von jeder Öffnung (19) nur ein Teil der starren Ringmutter (8) und ein Teil der lateralen Oberfläche des externen Rohrs (5) sichtbar sind.

## Revendications

1. Raccord pour tubes à haute pression, **caractérisé en ce qu'**il comprend, en combinaison, un tube externe ou trou (5) conçu pour être monté axialement sur un tube interne ou embout cannelé (4), et un joint glissant composite (7) installé entre eux, dans lequel ledit joint glissant composite (7) est formé essentiellement par une partie en caoutchouc (9) et un anneau rigide (8) - ayant la fonction de bride - qui est conçu pour tirer le joint (7) lui-même d'une position ou siège de repos (10) à une position ou siège de travail (11) par ledit tube externe ou trou (5) qui est monté axialement sur ledit tube interne ou embout cannelé (4) de telle manière qu'une compression de la partie en caoutchouc (9) du joint (7), qui garantit une étanchéité au fluide, soit obtenue grâce à la présence d'une zone conique (12) prévue dans ce but spécifique sur l'embout cannelé (4) entre ledit siège de repos (10) et ledit siège de travail (11), dans lequel:
- ladite partie en caoutchouc est essentiellement constituée par un anneau en caoutchouc (9) couplé de manière fixe à une bride coaxiale constituée de matériau rigide (8) en plastique ou métal ou un autre matériau approprié, ledit joint (7) étant conçu pour étanchéifier un accouplement avec jeu entre l'arbre creux ou tube interne (4) et le trou (5) à l'intérieur duquel un fluide sous pression peut s'écouler ;
- ledit joint (7) est conçu pour être logé dans ledit siège de repos (10) qui est circonférentiel et est réalisé sur la surface extérieure de l'embout cannelé (4) de telle manière que le diamètre extérieur de l'anneau en caoutchouc (9) positionné dans ledit siège (10) soit inférieur ou égal au diamètre de l'embout cannelé (4) lui-même et inférieur au diamètre du trou (5) ;
- ledit siège de repos (10) est arrondi par une rampe conique (12) vers le siège de travail (11) du joint (7) qui est disposé dans une autre portion de l'arbre (4) ; dans lequel le siège de travail (11) a un diamètre qui est supérieur au diamètre du siège de repos (10) et inférieur au diamètre de l'arbre (4) lui-même ;
**caractérisé en ce que**
durant l'insertion dans la direction axiale de l'arbre (4) dans le trou (5), le rebord du trou (5) est conçu pour s'engager avec la bride (8), en déplaçant le joint (7) axialement le long de la rampe conique (12) du siège de repos (10) au siège de travail (11) ; en obtenant ainsi que l'anneau en caoutchouc (9) soit progressivement comprimé entre la surface intérieure du trou (5) et la surface extérieure de l'arbre (4) jusqu'à une compression maximale dans le siège de travail (11), en garantissant ainsi une étanchéité à la pression.

2. Raccord selon la revendication précédente, **caractérisé en ce que** l'extrémité de l'arbre (4) destinée à être insérée dans le trou (5) prévoit une autre portion qui fonctionne comme un siège de calibrage (SC), constitué par une zone tronconique avec inclinaison appropriée, adaptée pour rétablir la circularité du trou d'un tube coupé aux dimensions, là où la section de coupe est ovalisée.

3. Raccord selon la revendication précédente, **caractérisé en ce que** le siège de calibrage (SC) est uni au siège de repos adjacent (10) au moyens d'un épaulement (13) sur lequel repose le bord de l'anneau en caoutchouc (9) de manière à empêcher un détachement accidentel du joint (7) par rapport à l'embout cannelé (4) .

4. Raccord selon la revendication précédente, **caractérisé en ce que**, une fois que l'accouplement a été réalisé, la surface frontale de la bride (8) est mise en appui sur un épaulement prévu dans ce but spécifique (14) avec développement radial, qui fait saillie dans une direction perpendiculaire à l'extrémité du siège de travail (11).

5. Raccord selon la revendication précédente, **caractérisé en ce que**, dans le cas où le trou (5) est réalisé à l'intérieur d'un tube externe, afin de fixer axialement les parties après leur accouplement pour obtenir le raccord, un manchon profilé (15) est prévu, lequel, du côté faisant face au pied de l'embout cannelé (4), est pourvu d'une zone de fixation et, du côté opposé, est muni d'un siège conique coulissant à l'intérieur duquel se trouve un anneau conique (27) avec une denture intérieure (16), conçue pour s'accrocher sur la surface extérieure du tube externe précité (5) pour empêcher le désaccouplement des parties et l'ouverture successive du raccord d'un type assemblé par poussée (1a) ; ladite zone de fixation étant bloquée axialement sur l'embout cannelé (4) au moyen d'un encliquetage (C) ou filetage (F) prévu dans ce but spécifique.

6. Raccord selon la revendication précédente, **caractérisé en ce que** ledit manchon profilé (15) est pourvu d'un ou plusieurs trous passants (19), qui sont distribués uniformément le long d'une circonférence et positionnés de manière appropriée de manière que, quand le raccord est correctement réalisé, seule une partie de l'écrou annulaire rigide (8) et une partie de la surface latérale du tube externe (5) soient visibles de chaque trou (19).

7. Raccord selon la revendication 4, **caractérisé en ce que**, dans le cas où le trou (5) est réalisé à l'intérieur d'un tube externe, de manière à fixer axialement les parties après leur accouplement pour obtenir le raccord, un manchon tubulaire extérieur (17) est prévu, lequel, après que le raccord étanche a été obtenu, est conçu pour être déformé plastiquement d'une manière connue pour presser une zone annulaire interne appropriée du tube (5) contre une denture de prise (18) disposée dans ce but spécifique sur la surface extérieure du siège de calibrage (SC) adjacent à l'épaulement (13).

8. Raccord selon la revendication précédente, **caractérisé en ce que** ledit manchon extérieur (17) est pourvu d'un ou plusieurs trous passants (19), qui sont distribués uniformément le long d'une circonférence et positionnés de manière appropriée de manière que, quand le raccord est correctement réalisé, seule une partie de l'écrou annulaire rigide (8) et une partie de la surface latérale du tube externe (5) soient visibles de chaque trou (19).
